# EUROPEAN PATENT APPLICATION

(11) **EP 4 134 660 A1**
(43) Date of publication of application: **15.02.2023**
(21) Application number: 21761813.1
(22) Date of filing: 10.02.2021
(51) Int. Cl.: G01N 21/64, G01N 21/76, G01N 35/00

(54) **IMAGING SYSTEM SUITABLE FOR MULTI-DETECTION OF BIOMOLECULE**

(30) Priority: 25.02.2020 CN 202010129135; 25.02.2020 CN 202020226457 U
(71) Applicant: Shanghai Jiao Tong University, Shanghai 200240 (CN); Shanghai Maijing Nano Technology Co., Ltd., Shanghai 200030 (CN)
(72) Inventor: GUO, Qingsheng, Shanghai 200240 (CN); XU, Hong, Shanghai 200240 (CN); GU, Hongchen, Shanghai 200240 (CN)
(74) Representative: Canzler & Bergmeier Patentanwälte Partnerschaft mbB
(86) International application number: PCT/CN2021/076515
(87) International publication number: WO 2021/169822

(57) **Abstract**

Provided is an imaging system suitable for multi-detection of a biomolecule. The imaging system comprises at least a first optical path and a second optical path, wherein the first optical path is from an excitation light source to an objective lens, with an optical filter set being arranged between the excitation light source and the objective lens, and the optical filter set being configured and arranged to guide excitation light emitted from the excitation light source to the objective lens; and the second optical path is from the objective lens to an image acquisition device, with a mirror being arranged between the objective lens and the image acquisition device, and the mirror being configured and arranged to project fluorescence received by the objective lens to the image acquisition device. The excitation light source comprises at least a first excitation light source and a second excitation light source, wherein the first excitation light source is used for excitation of a fluorescence signal, and the second excitation light source is used for excitation of a light excitation chemical luminescence signal. The imaging system can not only realize fluorescence imaging, but can also realize light excitation chemical luminescence imaging.

## Description

### FIELD OF TECHNOLOGY

The present invention relates to the field of biological detection, in particular to an imaging system for multiplex detection of biomolecules.

### BACKGROUND

Now conventional instruments of light-initiated chemiluminescent assay, such as Dimension EXL analyzer of Siemens, EnVision^{®} Multimode Plate Reader of PerkinElmer, and LiCA500 automatic chemiluminescence analyzer of Chemclin Diagnostics Co., Ltd., can only detect uniform signals in an entire homogeneous solution, and cannot detect the signal of a single detection particle, thereby the function of multiplex detection cannot be realized.

### SUMMARY

The present invention provides an imaging system for multiplex detection of biomolecules.

In a first aspect, the present invention provides an imaging system for multiplex detection of biomolecules, the imaging system simultaneously realizing fluorescence imaging and light-initiated chemiluminescence imaging.

In a second aspect, the present invention provides an imaging system for multiplex detection of biomolecules. The imaging system includes at least a first optical path and a second optical path; the first optical path is from an excitation light source to an objective lens, and a filter set is provided between the excitation light source and the objective lens, the filter set is configured to guide excitation light from the excitation light source to the objective lens; the second optical path is from the objective lens to an image acquisition device, a reflector is provided between the objective lens and the image acquisition device, the reflector is configured to project the fluorescence received by the objective lens to the image acquisition device; the excitation light source includes at least a first excitation light source and a second excitation light source, the first excitation light source is used for excitation of fluorescent signals, and the second excitation light source is used for excitation of light-initiated chemiluminescent signals.

In a third aspect, the present invention provides an use of the imaging system mentioned above in the filed of multiplex detection of biomolecules.

In a forth aspect, the present invention provides an imaging method for multiplex detection of biomolecules, which is carried out using the imaging system mentioned above, the method at least including:

1) turning on the first excitation light source of the imaging system, so that the light emitted by the first excitation light source passes through the filter set and then the objective lens to reach a sample for imaging, thereby obtaining a fluorescence image of the sample;

2) switching to the second excitation light source, so that the light emitted by the second excitation light source passes through the filter set and then the objective lens to reach the sample for imaging, thereby obtaining a light-initiated chemiluminescence image of the sample.

In a fifth aspect, the present invention provides an image analysis method for multiplex detection of biomolecules, including:

S1: matching a fluorescence image of a detection solution with a light-initiated chemiluminescence image of the detection solution according to light spot positions, to obtain a fluorescence signal and a light-initiated chemiluminescence signal corresponding to each light spot. The fluorescence image and the light-initiated chemiluminescence image are obtained by the imaging method mentioned above;

S2: performing cluster classification on the fluorescence signals, and obtaining an average light-initiated chemiluminescence intensity corresponding to each fluorescence signal;

S3: determining the content of each molecule to be tested in the detection solution according to the different classifications of the fluorescent signals and the average light-initiated chemiluminescence intensity.

In a sixth aspect, the present invention provides a computer-readable storage medium on which a computer program is stored, and when the program is executed by a processor, the image analysis method mentioned above is implemented.

As described above, the imaging system for multiplex detection of biomolecules of the present invention has the following beneficial effects:

The present invention combines fluorescence imaging and light-initiated chemiluminescence imaging for the first time, fluorescence signals and light-initiated chemiluminescence signals can be detected at the same time, which is suitable for multiplex light-initiated chemiluminescence detection.

### BRIEF DESCRIPTION OF THE DRAWINGS

FIG. 1 shows a schematic diagram of an imaging system for multiplex detection of biomolecules of the present invention, and the arrows in the figure indicate the propagation direction of light.
FIG. 2 shows obtained images of the imaging system for multiplex detection of biomolecules of the present invention used for multiplex light-initiated chemiluminescence.
FIG. 3 shows a flow chart of image analysis using the imaging system for multiplex detection of biomolecules of the present invention used for multiplex light-initiated chemiluminescence.
FIG. 4 shows the results of cluster classification obtained by an image analysis software of the imaging system for the multiplex detection of biomolecules of the present invention used for multiplex light-initiated chemiluminescence, where the results show the fluorescence classification of four detection particles and the corresponding light-initiated chemiluminescence intensity.
FIG. 5 shows a communication relationship diagram in the imaging system of the present invention.

### Reference Numerals

- 1: excitation light source
- 11: first excitation light source
- 12: second excitation light source
- 13: filter set
- 14: sample stage
- 15: objective lens
- 16: reflector
- 17: light source switch
- 2: image acquisition device
- 3: workstation
- 31: control center
- 32: trigger control box

### DETAILED DESCRIPTION

Embodiments of the present invention are described below by specific embodiments, and those skilled in the art can easily understand other advantages and effects of the present invention from the contents disclosed in this specification.

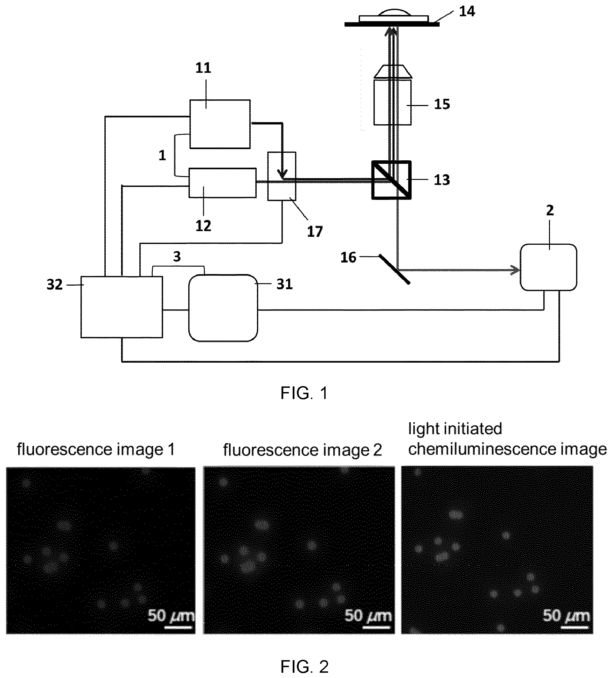

Referring to FIGs. 1 to 5, it should be noted that the structures, proportions, sizes, etc. shown in the drawings in this specification are only used to cooperate with the contents disclosed in the specification to be understood and read by those skilled in the art, and are not used to limit the implementation of the present invention. Any structural modification, proportional relationship change or size adjustment, without affecting the effect and the purpose of the present invention, should still fall within the scope that can be covered by the technical content disclosed in the present invention. At the same time, the terms such as "up", "down", "left", "right", "middle" and "one" quoted in this specification are only for the convenience and clarity of description, and are not intended to limit the implementable scope of the invention, the change or adjustment of the relative relationship thereof, without substantially changing the technical content, shall also be regarded as within the implementable scope of the present invention.

The present invention provides an imaging system for multiplex detection of biomolecules, which is capable of simultaneously realizing fluorescence imaging and light-initiated chemiluminescence imaging.

As shown in FIG. 1, an imaging system for multiplex detection of biomolecules in an embodiment of the present invention includes at least a first optical path and a second optical path; the first optical path is from an excitation light source 1 to an objective lens 15, and a filter set 13 is provided between the excitation light source and the objective lens, the filter set 13 is configured to guide an excitation light from the excitation light source to the objective lens; the second optical path is from the objective lens 15 to an image acquisition device 2, a reflector 16 is provided between the objective lens 15 and the image acquisition device 2 , the reflector 16 is configured to project the fluorescence received by the objective lens 15 to the image acquisition device 2; the excitation light source 1 includes at least a first excitation light source 11 and a second excitation light source 12, the first excitation light source 11 is used for excitation of fluorescent signals, and the second excitation light source 12 is used for excitation of light-initiated chemiluminescent signals.

The imaging system can simultaneously realize fluorescence imaging and light-initiated chemiluminescence imaging.

The imaging system further includes a sample stage 14, the sample stage is arranged above the objective lens and is used to place an object to be observed.

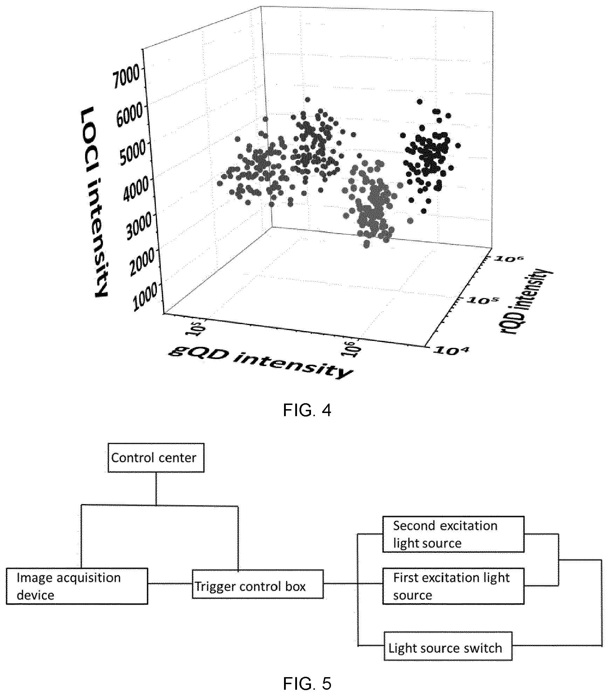

As shown in FIG. 5, the imaging system further includes a workstation 3 and a light source switch 17, the workstation is connected in communication with the image acquisition device 2, and the light source switch 17 is connected in communication with the excitation light source 1 and the workstation 3.

The connection in communication refers to forming communication between connected devices through the transmission and interaction of signals. The connection in communication includes wired connection and wireless connection, such as electrical signal transmission connection, digital signal transmission connection and the like.

The light source switch 17 can switch the excitation light source 1.

As shown in FIG. 5, the workstation includes a control center 31 and a trigger control box 32 that are connected in communication with each other. The trigger control box 32 is connected in communication with the light source switch 17, the excitation light source 1 and the image acquisition device 2. The control center 31 is connected in communication with the image acquisition device 2.

The control center 31 can be a computer, and the computer can be used to carry an image processing program for matching the image obtained after the excitation of signals of a microcarrier having an encoding function with the image obtained after the excitation of signals of a detection particle and signal analyzing. The trigger control box can also be equipped with a trigger control box control program for controlling the trigger control box.

The control center is used to control the trigger control box 32, and the trigger control box is used to control the light source switching switch 17, the on and off of the excitation light source 1, and the image acquisition device 2.

The control center 31 may directly control the on and off of the excitation light source 1 through the trigger control box 32, and may also control the image acquisition device through the trigger control box 32, thereby realizing the on and off of the excitation light source. Specifically, the image acquisition device 2 can be activated to generate a TTL (transistor-transistor logic integrated circuit) signal which is then sent to the trigger control box, after receiving the signal, the trigger control box immediately sends the TTL control signal to the excitation light source 1 and then controls the excitation light source 1 to turn on. The control center can realize the switching between the first excitation light source 11 and the second excitation light source 12 by controlling the on and off of the light source switch.

Optionally, the imaging system includes an ordinary fluorescence imaging mode and a time-resolved fluorescence mode, the ordinary fluorescence imaging mode means that light emission of the excitation light source is synchronized with exposure of the image acquisition device; the time-resolved fluorescence mode means that light emission of the excitation light source is not synchronized with exposure of the image acquisition device.

In one embodiment, switching between the two fluorescence modes can be realized by controlling the trigger control box through the control center.

Specifically, in the ordinary fluorescence imaging, the excitation light source is turned on simultaneously while the image acquisition device 2 starts to expose. At this time, the excitation time of the excitation light source can be set to be the same as the exposure time of a camera, the image acquisition device 2 is started to generate the TTL (transistor-transistor logic integrated circuit) signal which is subsequently sent to the trigger control box, after receiving the signal, the trigger control box immediately sends the TTL control signal to the excitation light source 1 to turn on the excitation light source 1. At this time, the camera synchronously starts exposure to realize the synchronization of light emission of the excitation light source and exposure of the image acquisition device.

In the time-resolved fluorescence imaging mode, the control center controls the excitation light source to turn on through the trigger control box, and the exposure of the image acquisition device 2 is turned off at this time. After a period of time, the excitation light source is turned off, and at this time the image acquisition device 2 is turned on for exposure. At this time, the image acquisition device 2 is started to generate the TTL (transistor-transistor logic integrated circuit) signal which is sent to the trigger control box. After receiving the signal, the trigger control box immediately sends the TTL control signal to the excitation light source 1 and then turns on the excitation light source 1, the camera has not started exposure at this time; when a preset excitation time of the excitation light source is finished, the excitation light source is turned off, the camera starts exposure at this time to obtain an image. By this way, background noise generated by the excitation light can be further reduced. The time-resolved fluorescence function can be switched on or off by controlling the trigger control box through a program carried on the control center 31.

The trigger control box may be a conventional trigger control box, such as FluoCa's VV-TRGBOX trigger control box.

The first excitation light source 11 may be one or more of a laser, a xenon lamp, a mercury lamp, a halogen lamp or a light emitting diode.

The second excitation light source 12 may be one or more of a laser, a xenon lamp, a mercury lamp, a halogen lamp or a light emitting diode.

The image acquisition device 2 may be a camera.

The image acquisition device 2 is selected from one or more of charge-coupled device (CCD), electron-multiplying charge-coupled device (EMCCD), complementary metal-oxide-semiconductor image sensor (CMOS), and scientific complementary metal-oxide-semiconductor image sensor (sCMOS).

The filter set 13 at least includes a first filter subset, a second filter subset and a third filter subset, and each of the filter subsets includes an excitation filter, an emission filter and a dichroic mirror.

The filter set 13 is detachable. It can be replaced according to the fluorescent substances of different excitation and emission wavelengths, or according to the types of photosensitizers and chemiluminescent agents filled in different light-initiated chemiluminescent particles.

The number of the filter subsets can be adjusted according to the type and number of fluorescent substances.

In one embodiment, the first filter subset includes: excitation filter 488/15 nm, dichroic mirror 495 nm longpass, emission filter 535/23 nm.

In one embodiment, the second filter subset includes: excitation filter 488/15 nm, dichroic mirror 495 nm longpass, emission filter 600/40 nm.

In one embodiment, the third filter subset includes: excitation filter 680/13 nm, dichroic mirror 653 nm shortpass, emission filter 615/20 nm.

In each of the filter subset, the excitation filter, the dichroic mirror and the emission filter are arranged in sequence.

In an embodiment, the angle between the dichroic mirror and the propagation direction of an excitation light generated by the excitation light source is 45°.

In each of the filter subset, the excitation light generated by the excitation light source first passes through the excitation filter, and then reaches a surface of the dichroic mirror. Light with wavelengths below 495 nm is reflected, and light with wavelengths above 495 nm is transmitted, according to the properties of the dichroic mirror itself. Thereby the excitation light is reflected to the objective lens after reaching the dichroic mirror, and then propagates to the sample. A light signal excited by the sample returns to the dichroic mirror after passing through the objective lens, then passes through the dichroic mirror and the emission filter, reaches the reflector, and is reflected to the image acquisition device by the reflector.

The imaging system can realize the function of fluorescence imaging and light-initiated chemiluminescence imaging. ①Fluorescence imaging function: a fluorescent light from a source passes through the first filter subset (excitation filter 488/15 nm, dichroic mirror 495 nm longpass, emission filter 535/23 nm) or the second filter subset (excitation filter 488/15 nm, dichroic filter 495 nm longpass, emission filter 600/40 nm), as well as objective lens, to excite the sample; a fluorescence signal generated by the sample passes through the objective lens as well as the first filter subset or the second filter subset, and is finally captured by the camera to generate two fluorescence images. ② light-initiated chemiluminescence imaging function: a light-initiated chemiluminescence light from a source passes through the third filter subset (excitation filter 680/13 nm, dichroic mirror 653 nm shortpass, emission filter 615/20 nm) and the objective lens to excite the sample, and a light-initiated chemiluminescence signal generated by the sample passes through the objective lens and the third filter group again, and is finally captured by the camera to generate a light-initiated chemiluminescence image.

The control center of the workstation of the present invention may install different image processing programs and control programs of the trigger control box as required. The control program of the trigger control box can be easily realized by those skilled in the art as long as they know the two modes mentioned above of the present invention.

The imaging system can switch between any one of the three filter subsets into an imaging optical path through a filter turntable.

The imaging system has two imaging modes, one of which is a ordinary fluorescence mode for the excitation of a light-initiated chemiluminescence signal, the other is a time-resolved fluorescence mode for the excitation of a light-initiated chemiluminescence signal. The ordinary fluorescence mode specifically includes:
1: Place a sample on the sample stage and focus on an object to be tested in the sample.
2: Switch the first filter subset to enter the imaging optical path, and switch to a fluorescence excitation light source through a light source switching module. Turn off a function of time-resolved fluorescence, set the exposure time of the camera to 200ms to take pictures, and obtain a fluorescence image 1, as shown in FIG. 2.
3: Switch the second filter subset to enter the imaging optical path, other conditions are the same as step 2, and take pictures to obtain a fluorescence image 2, as shown in FIG. 2.
4: Switch the third filter subset to enter the imaging optical path, switch to a light-initiated chemiluminescence excitation light source through the light source switching module, turn off the function of time-resolved fluorescence, set the excitation time of the light source to 1000ms, and the exposure time of the camera to 1000ms. Turn on a light source switch by controlling the camera, and the camera starts exposure synchronously. After 1000ms, the exposure ends and the light source is turned off to obtain a light-initiated chemiluminescence image, as shown in FIG. 2.

The time-resolved fluorescence mode specifically includes:
1: Place a sample on the sample stage and focus on an object to be tested in the sample by adjusting a focusing knob that controls the distance between the objective lens and the sample stage.
2: Switch the first filter subset to enter the imaging optical path, and switch to the fluorescence excitation light source through the light source switching module. Turn off the function of time-resolved fluorescence, set the exposure time of the camera to 200ms to take pictures, and obtain a fluorescence image 1.
3: Switch the second filter subset to enter the imaging optical path, other conditions are the same as step 2, and take pictures to obtain a fluorescence image 2.
4: Switch the third filter subset to enter the imaging optical path, switch to the light-initiated chemiluminescence excitation light source through the light source switching module, turn on the function of time-resolved fluorescence, set the excitation time of the light source to 500ms, and the exposure time of the camera to 1000ms. Turn on the light source switch by controlling the camera, and at this time the exposure of the camera is off. After 500ms, the light source is turned off and the exposure starts, after 1000ms, the exposure ends to obtain a light-initiated chemiluminescence image.

The imaging method for multiplex detection of biomolecules according to an embodiment of the present invention is performed using the aforementioned imaging system, and at least includes:
1) Turn on the first excitation light source of the imaging system, so that the light emitted from the excitation light source passes through the filter set, reaches the sample through the objective lens and peforms imaging, so as to obtain a fluorescence image of the sample;
2) Switch to the second excitation light source, so that the light emitted from the excitation light source passes through the filter set, reaches the sample through the objective lens and peforms imaging to obtain a light-initiated chemiluminescence image of the sample.

Further, the imaging method further includes: change the parameters of the filter set and repeat step 1) to obtain multiple fluorescence images of the sample.

The fluorescence image and the light-initiated chemiluminescence image of the sample are collected by the image acquisition device.

In one embodiment, the imaging method may adopt the ordinary fluorescence mode or the time-resolved fluorescence mode, when the time-resolved fluorescence mode is adopted, in step 2), after switching to the second excitation light source, i.e light-initiated chemiluminescence excitation light source, turn on the time-resolved fluorescence mode to obtain the light-initiated chemiluminescence image of the sample. Specifically, the workflow of the two aforementioned modes can be referred to.

The images obtained by the above method can be analyzed and processed in the control center 31 of the imaging system of the present invention.

The image analysis method for multiplex detection of biomolecules in an embodiment of the present invention includes:
S1: Match a fluorescence image and a light-initiated chemiluminescence image of a detection solution according to light spot positions to obtain a fluorescence signal and a light-initiated chemiluminescence signal corresponding to each spot. The fluorescence image and the light-initiated chemiluminescence image of the detection solution are obtained by the imaging method mentioned above;
S2: Perform cluster classification on the fluorescence signals, and obtain an average light-initiated chemiluminescence intensity corresponding to each fluorescence signal;
S3: Determine the content of each molecule to be tested in the detection solution according to the different classifications of the fluorescent signals and the average light-initiated chemiluminescence intensity of each fluorescence signal.

The detection solution suitable for the above analysis method is a reaction solution for multiplex light-initiated chemical detection.

The reaction solution for multiplex light-initiated chemical detection is a homogeneous reaction solution, and its reactants generally include detection particles suitable for multiplex detection of biomolecules, molecules to be tested, and matching microparticles. The molecule to be tested can form a complex with the corresponding detection particle and the matching microparticle, and the complex can emit a light signal under laser irradiation.

The reaction solution for multiplex light-initiated chemical detection can simultaneously detect multiple molecules to be tested in a single homogeneous reaction solution.

The molecule to be tested can be a protein, a small molecule antigen or a nucleic acid.

The detection particle suitable for multiplex detection of biomolecules includes a microcarrier with an encoding function, and the microcarrier is connected to a detection microparticle.

The microcarrier with the encoding function can be selected from one or more of a fluorescent encoding microcarrier, a Raman signal encoding microcarrier, a photonic crystal encoding microcarrier, and a pattern encoding microcarrier.

The detection microparticle should be suitable for light-initiated chemiluminescence detection. The detection microparticle should include a donor microparticle (DB) or an acceptor microparticle (AB) suitable for light-initiated chemiluminescence detection. The acceptor microparticle can emit fluorescence, and the donor microparticle is used to excite the acceptor microparticle to emit light. The DB is doped with a photosensitizer, which can generate singlet oxygen after being excited by light. The AB is doped with a chemiluminescent agent and a fluorescent agent. The chemiluminescent agent converts the energy of singlet oxygen into 360 nm emission light, to excite the fluorescent agent to generate fluorescence. The chemiluminescent agent is selected from one or more of dioxyheterocyclic ethylene and dimethylthiophene.

The detection microparticle may further include a specific biocapture substance, including but not limited to one or more of a biocapture probe, an antigen, an antibody, ProtinA, ProtinG, and streptavidin. The biocapture substance may be coupled to either the donor microparticle or the acceptor microparticle. The biocapture substance may specifically bind to the molecule to be tested.

The matching microparticle is a light-initiated chemiluminescent particle that matches the detection microparticle in the detection particle. In general, when the detection microparticle includes the donor microparticle, the matching microparticle should include the acceptor microparticle; when the detection microparticle includes the acceptor microparticle, the matching microparticle should include the donor microparticle.

The matching microparticles may further include a detection substance, including but not limited to, one or more of a probe, an antigen, an antibody, ProtinA, ProtinG, and streptavidin. The detection substance may be coupled to either the donor microparticl or the acceptor microparticle. The detection substance should not directly bind to the detection particle, but can form a complex with the detection particle via the molecule to be tested. Therefore, the detection substance should be able to specifically bind to the molecule to be tested, or the detection substance should be able to specifically bind to the molecule to be tested via an intermediate conjugate.

When the molecule to be tested exists, the molecule to be tested forms a complex with the corresponding detection particle and matching microparticle. After being irradiated by the laser, the DB in the complex can activate oxygen in the surrounding environment and convert the activated oxygen into singlet oxygen, whose survival time is only 4 microseconds. The short survival time determines the small propagation diameter (about 200 nm) of ionic oxygen. Since the distance between the AB and DB in the complex is less than 200 nm, AB receives singlet oxygen generated by DB and is excited to emit the light signal. However, when there is no molecule to be tested, the distance between AB and DB is too far to excite the light signal of AB.

The reaction solution for multiplex light--initiated chemical detection may include a variety of detection particles suitable for multiplex detection of biomolecules. Based on the different codes of the detection particles, different fluorescence can be emitted to distinguish different detection results of the molecules to be tested. And/or, the detection results of different molecules to be tested can also be distinguished based on the difference in light-initiated chemiluminescence of complexes formed by the molecules to be tested, the corresponding detection particles and the matching microparticles.

Since the position of each detection particle is relatively static in the detection solution, the light spot of the fluorescence image is derived from the coding substance in the detection particle and/or the reaction complex formed by the detection particle. The light spot of the light-initiated chemiluminescence image is derived from the reaction complex formed by the detection particle. Therefore, the light spots at the same position in the fluorescence image and the light-initiated chemiluminescence image can be matched to obtain the fluorescence signal and light-initiated chemiluminescence signal corresponding to the detection particle or the reaction complex formed by the detection particle at the position. Further, by peforming cluster classification on the fluorescence signals, the average light-initiated chemiluminescence intensity corresponding to each fluorescence signal is obtained. Since different molecules to be tested correspond to different fluorescence signals, an average light-initiated chemiluminescence intensity corresponding to each molecule to be tested can be obtained according to the molecule to be tested, the type of fluorescence signal, and the average light-initiated chemiluminescence intensity corresponding to the fluorescence signal, further the content of each molecule to be tested can be obtained according to the corresponding relationship between the average light-initiated chemiluminescence intensity and the concentration of the molecule to be tested.

In S1, the position of the light spot in the image can be identified by global thresholding, and the fluorescence image and the light-initiated chemiluminescence image of the detection solution are matched according to the position of the light spot.

Various parameters of the light signal can be collected to characterize the fluorescence signal and the light-initiated chemiluminescence signal, such as the gray value or RGB value of the light spot.

In a preferred embodiment, noise reduction is performed before matching the fluorescence image and the light-initiated chemiluminescence image to distinguish the fluorescence signal or light-initiated chemiluminescence signal from the background signal.

In S2, the fluorescent signals can be clustered according to different characteristic values of the light signals. The average light-initiated chemiluminescence intensity corresponding to each fluorescence signal can be obtained by using conventional statistical methods.

In S3, the following operations may be specifically included:

Determine the average light-initiated chemiluminescence intensity corresponding to each molecule to be tested according to the corresponding relationship between the molecule to be tested and the type of the fluorescence signal; the concentration of each molecule to be tested is obtained according to a standard curve of light-initiated chemiluminescence and the average light-initiated chemiluminescence intensity corresponding to each molecule to be tested.

Further, an embodiment of the present invention further provides a computer-readable storage medium on which a computer program is stored, and when the program is executed by a processor, the foregoing method is implemented.

Those of ordinary skill in the art can understand that all or part of steps of implementing the methods in above embodiments may be completed by hardware related to computer programs. The aforementioned computer program may be stored in a computer-readable storage medium. When the program is implemented, the methods in the above embodiments are executed; the computer-readable storage medium may include, but is not limited to, a floppy disk, an optical disk, a CD-ROM (optical disk read-only memory), a magnetooptical disk, a ROM (read only memory), a RAM (random access memory), an EPROM (erasable programmable read only memory), an EEPROM (electrically erasable programmable read only memory), a magnetic or optical card, a flash memory, or other types of media/machine-readable media suitable for storing machine-executable instructions. The computer-readable storage medium may be a product that is not connected to a computer device, or may be a component that is connected to a computer device for use.

Further, the control center 31 in an embodiment of the present invention may be equipped with an image analysis software to implement the above analysis method.

In a specific embodiment, the process of the software for analyzing images includes: image preprocessing, co-localization, grayscale analysis, and cluster analysis. ①Image preprocessing: noise reduction is performed on the obtained fluorescence image and light-initiated chemiluminescence image to distinguish the fluorescence signal or light-initiated chemiluminescence signal from the background signal, and the position of the signal in the image is identified by global thresholding. ② Co-localization: unify the positions of the fluorescence signal and the light-initiated chemiluminescence signal in the image. ③ Grayscale analysis: read the grayscale values of the fluorescence signal and the light-initiated chemiluminescence signal, respectively. ④Clustering analysis: cluster the fluorescence signals at different positions in the image according to the intensity of the grayscale values to obtain different classifications, which are used as the categories of different molecules to be tested. Then, the grayscale values of the light-initiated chemiluminescence signal in different fluorescence classifications are counted to obtain the content (concentration) levels of different types of molecules to be tested.

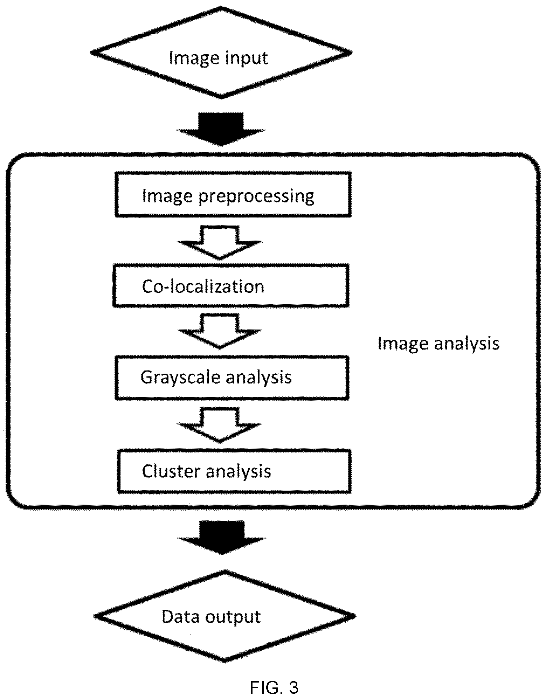

As shown in FIG. 3, a process of image analysis for multiplex light-initiated chemiluminescence is as follows:
Step 1: Image input. The software reads the fluorescence images and light-initiated chemiluminescence images obtained above.
Step 2: Image preprocessing. Noise reduction is performed on the obtained images to distinguish the fluorescence signal or light-initiated chemiluminescence signal from the background signal, and the position of the signal in the image is identified by global thresholding.
Step 3: Co-localization: Unify the positions of the fluorescence signal and the light-initiated chemiluminescence signal in the image.
Step 4: Grayscale analysis. Read the grayscale values of the fluorescence signal and the light-initiated chemiluminescence signal, respectively.
Step 5: Cluster analysis: Cluster the fluorescence signals at different positions in the image according to the intensity of the grayscale values to obtain different classifications. Then, the grayscale values of the light-initiated chemiluminescence signal in different fluorescence classifications are counted to obtain the average light-initiated chemiluminescence intensity.
Step 6: Data output: The different fluorescence classifications obtained in step 5 are corresponded one by one with the different types of molecules to be tested. Then, the average light-initiated chemiluminescence intensity of different fluorescence classifications is substituted into a standard curve of the corresponding molecules to be tested, to obtain the actual content (concentration) of the molecules to be tested.

FIG. 4 shows the cluster analysis results for multiplex light-initiated chemiluminescence images by the image analysis software, and the results show the fluorescence classifications and the corresponding light-initiated chemiluminescence intensities of four detection particles.

The aforementioned imaging system for multiplex detection of biomolecules can be used for applications in the field of multiplex detection of biomolecules.

The above-mentioned embodiments merely illustrate the principles and effects of the present invention, but are not intended to limit the present invention. Any person skilled in the art can modify or change the above embodiments without departing from the spirit and scope of the present invention. Therefore, all equivalent modifications or changes made by those with ordinary knowledge in the technical field without departing from the spirit and technical idea disclosed in the present invention should still be covered by the claims of the present invention.

## Claims

1. An imaging system for multiplex detection of biomolecules, wherein the imaging system simultaneously realizes fluorescence imaging and light-initiated chemiluminescence imaging.

2. An imaging system for multiplex detection of biomolecules, wherein
the imaging system comprises at least a first optical path and a second optical path;
the first optical path is from an excitation light source (1) to an objective lens (15), a filter set (13) is provided between the excitation light source and the objective lens, and the filter set (13) is configured to guide excitation light from the excitation light source to the objective lens;
the second optical path is from the objective lens (15) to an image acquisition device (2), a reflector (16) is provided between the objective lens (15) and the image acquisition device (2), and the reflector (16) is configured to project fluorescence received by the objective lens (15) to the image acquisition device (2);
the excitation light source (1) comprises at least a first excitation light source (11) and a second excitation light source (12), wherein the first excitation light source (11) is used for excitation of fluorescent signals, and the second excitation light source (12) is used for excitation of light-initiated chemiluminescence signals.

3. The imaging system according to claim 2, wherein the imaging system further comprises a workstation (3) and a light source switch (17), the workstation is connected in communication with the image acquisition device (2), and the light source switch (17) is connected in communication with the excitation light source (1) and the workstation (3).

4. The imaging system according to claim 3, wherein the workstation comprises a control center (31) and a trigger control box (32); wherein the trigger control box (32) is connected in communication with the excitation light source (1), the light source switch (17) and the image acquisition device (2); wherein the control center (31) is connected in communication with the image acquisition device (2) and the trigger control box (32).

5. The imaging system according to claim 2 or 4, wherein the imaging system comprises an ordinary fluorescence imaging mode and a time-resolved fluorescence mode; in the ordinary fluorescence imaging mode, light emission of the excitation light source is synchronized with exposure of the image acquisition device; in the time-resolved fluorescence mode, light emission of the excitation light source is not synchronized with exposure of the image acquisition device.

6. The imaging system according to claim 2, wherein the imaging system further comprises one or more of the following features:
a. the first excitation light source (11) or the second excitation light source (12) is selected from one or more of a laser, a xenon lamp, a mercury lamp, a halogen lamp, and a light emitting diode;
b. the image acquisition device (2) is selected from one or more of charge-coupled device (CCD), electron-multiplying charge-coupled device (EMCCD), complementary metal-oxide-semiconductor image sensor (CMOS), and scientific complementary metal-oxide-semiconductor image sensor (sCMOS);
c. the filter set (13) comprises at least a first filter subset, a second filter subset and a third filter subset, and each filter subset comprises an excitation filter, an emission filter and a dichroic mirror;
d. the filter set (13) is detachable.

7. The imaging system according to claim 6, wherein the imaging system further comprises one or more of the following features:
(1) the first filter subset comprises: excitation filter 488/15 nm, dichroic mirror 495 nm longpass, emission filter 535/23 nm;
(2) the second filter subset comprises: excitation filter 488/15 nm, dichroic mirror 495 nm longpass, emission filter 600/40 nm;
(3) the third filter subset comprises: excitation filter 680/13 nm, dichroic mirror 653 nm shortpass, emission filter 615/20 nm.

8. An use of the imaging system according to any one of claims 1-7 in the filed of multiplex detection of biomolecules.

9. An imaging method for multiplex detection of biomolecules, wherein the imaging method uses the the imaging system according to any one of claims 1-7, wherein the imaging method at least comprises:
1) turning on the first excitation light source of the imaging system, so that light emitted by the first excitation light source passes through the filter set and then the objective lens to reach a sample for imaging, thereby obtaining a fluorescence image of the sample;
2) switching to the second excitation light source, so that light emitted by the second excitation light source passes through the filter set and then the objective lens to reach the sample for imaging, thereby obtaining a light-initiated chemiluminescence image of the sample.

10. The imaging method according to claim 9, wherein the imaging method further comprises: changing parameters of the filter set and repeating the operations in 1) to obtain multiple fluorescence images of the sample.

11. The imaging method according to claim 9, wherein after switching to the second excitation light source in operation 2), a time-resolved fluorescence mode is turned on to obtain the light-initiated chemiluminescence image of the sample.

12. An image analysis method for multiplex detection of biomolecules, comprising:
S1: matching a fluorescence image of a detection solution with a light-initiated chemiluminescence image of the detection solution according to light spot positions, to obtain a fluorescence signal and a light-initiated chemiluminescence signal corresponding to each light spot, wherein the fluorescence image and the light-initiated chemiluminescence image are obtained by the imaging method according to any one of claims 9-11;
S2: performing cluster classification on the fluorescence signals, and obtaining an average light-initiated chemiluminescence intensity corresponding to each fluorescence classification;
S3: determining the content of each molecule to be tested in the detection solution according to the different classifications of the fluorescent signals and the average light-initiated chemiluminescence intensity corresponding to each fluorescence classification.

13. A computer-readable storage medium having a computer program stored thereon, wherein the program implements the operations of the image analysis method according to claim 12 when executed by a processor.
